# EUROPÄISCHE PATENTSCHRIFT

(11) **EP 0 397 715 B1**
(45) Veröffentlichungstag und Bekanntmachung des Hinweises auf die Patenterteilung: **27.04.1994**
(21) Anmeldenummer: 89901247.0
(22) Anmeldetag: 05.01.1989
(51) Int. Cl.: B23Q 7/00, B65G 21/00, B65G 21/20, B65G 23/44, B65G 37/00

(54) **ANLAGE ZUR BEARBEITUNG UND/ODER MONTAGE VON BAUTEILEN**
ARRANGEMENT FOR MACHINING AND/OR ASSEMBLING COMPONENTS
INSTALLATION POUR TRAVAILLER OU MONTER DES PIECES

(30) Priorität: 07.01.1988 AT 20/88
(43) Veröffentlichungstag der Anmeldung: 22.11.1990
(73) Patentinhaber: Sticht, Walter, A-4800 Attnang-Puchheim (AT)
(72) Erfinder: Sticht, Walter, A-4800 Attnang-Puchheim (AT)
(74) Vertreter: Secklehner, Günter, Dr.
(86) Internationale Anmeldenummer: AT8900002
(87) Internationale Veröffentlichungsnummer: WO8906177

(56) Entgegenhaltungen:
- DE-A- 3 304 091
- DE-A- 3 502 820
- US-A- 2 016 994
- US-A- 2 753 039
- US-A- 2 764 276
- US-A- 3 605 994

## Beschreibung

Die Erfindung betrifft eine Anlage mit mehreren Arbeitsstationen zur Bearbeitung und bzw. oder Montage von Bauteilen, wie sie im Oberbegriff des Patentanspruches 1 beschrieben ist.

Es ist auch ein Gehäusebauteilsystem für endlose Riemen oder andere Transportorgane bekannt - gemäß US-A 3 605 994 - bei welchem das umlaufende Transportorgan auf in deren Längsseitenbereichen verlaufenden Höhenführungsleisten geführt ist. Diese Höhenführungsleisten sind auf einer aus mehreren gleichartig ausgebildeten Gehäuseteilen zusammengesetzten Führungsbahnen abgestützt, wobei diese Gehäuseteile untereinander und mit Umlenkstationen für das umlaufende Transportorgan über Führungs- und bzw. oder Kupplungsvorrichtungen zu einer Gehäuseeinheit verbunden sind. Die Gehäuseeinheit ist über Stützvorrichtungen auf einer Aufstandsfläche abgestützt. Eine Ausführungsvariante dieser bekannten Anlage sieht vor, daß das umlaufende Transportorgan durch hintereinander gereihte über Schwenkachsen miteinander verbundene Plattenelemente gebildet ist. Die plattenförmigen Transportorgane liegen über ihren gesamten Längsverlauf auf den seitlichen Höhenführungen auf. Eine exakte gleichbleibende Positionierung der plattenförmigen Transportorgane in unterschiedlichen Längsbereichen der aus den Gehäuseteilen zusammengesetzten Führungsbahn kann dadurch nicht sichergestellt werden.

Bei derartigen Anlagen wird grundsätzlich zwischen sogenannten lose verketteten und starr verketteten Anlagen unterschieden. Bei den hängig voneinander entlang der Anlage bewegt und es ist bei Ausfall einer Vorrichtung in einer einzigen Arbeitsstation die Tätigkeit in den anderen Arbeitsstationen über einen gewissen Zeitraum nahezu nicht beeinflußt. Bei den starr verketteten Anlagen sind die Werkstückträger miteinander bewegungsverbunden, sodaß bei Störungen im Bereich einer Arbeitsstation alle Werkstückträger und alle Arbeitsstationen blockiert sind. Jede der beiden Anlagetypen hat ihr spezielles Einsatzspektrum, wobei die starr verketteten Anlagen dort eingesetzt werden, wo nur wenige Arbeitsstationen miteinander verbunden sind, da sich der Gesamtnutzungsgrad aus einer Multiplikation der Nutzungsgrade der einzelnen Arbeitsstationen ergibt. Die lose verketteten Anlagen werden meistens für die Verkettung von einer Vielzahl von Arbeitsstationen beispielsweise bis zu 40 Arbeitsstationen und mehr eingesetzt, da dort der Nutzungsgrad ein Mischwert aus den einzelnen Störfällen ist und sich nicht aus einer Multiplikation der Nutzungsgrade in den Einzelstationen zusammensetzt.

Es sind bereits viele verschiedene Anlagen mit loser Verkettung - beispielsweise gemäß DE-A- 35 02 868, DE-A- 35 02 820, DE-A- 34 11 452, DE-A 33 04 091, DE-A-27 56 422 des gleichen Anmelders - bekannt geworden, die sich für die Verkettung einer Vielzahl von Arbeitsstationen in der Praxis bewährt haben. Die Werkstückträger sind dabei jeweils unabhängig voneinander auf Höhen- und Seitenführungsbahnen geführt, wobei durch eine entsprechende Verwendung von an den Seitenflächen der Werkstückträger angepreßten Förderrollen eine spielfreie Seiten- und Höhenführung der Werkstückträger sichergestellt wird. Dadurch wird über den gesamten Verlauf einer derartigen Anlage eine exakte Positionierung der Werkstückträger im Zusammenwirken mit der Antriebsvorrichtung erreicht.

Desweiteren sind starr verkettete Anlagen, bei welchen die einzelnen Werkstückträger über Förderketten verbunden sind - gemäß DE-A- 26 40 593 - bekannt. Bei derartigen Anlagen war es bis jetzt schwierig, diese serienmäßig herzustellen, bzw. jeweils an einen unterschiedlichen Bedarf mit unterschiedlicher Anzahl von Arbeitsstationen anpassen zu können. Darüber hinaus war das Einrichten der Kette auf die in den Arbeitsstationen angeordneten Montage- bzw. Bearbeitungsvorrichtungen schwierig. Die weiters bekannten starr verketteten Anlagen zur Bearbeitung und Montage von Bauteilen werden durch Drehtische gebildet, die gegebenenfalls auch über zusätzliche Transporteinrichtungen miteinander verkettet werden können - z.B. gemäß DE-A- 31 34 195. Derartige starr verkettete Anlagen, die durch Drehtische gebildet sein können, sind nachträglich um zusätzliche Arbeitsstationen nicht erweiterbar und bedürfen eines großen Platzaufwandes, vor allem bei der Anordnung von mehreren Arbeitsstationen hintereinander. Weiters ist die Zugänglichkeit, der Aufbau und auch die Wartung durch die kompakte Anordnung der im Inneren des Drehtisches angeordneten Montage- und Handhabungsvorrichtungen bzw. Bearbeitungsvorrichtungen sehr schwierig.

Der vorliegenden Erfindung liegt die Aufgabe zugrunde, eine Anlage zur Bearbeitung und bzw. oder zur Montage von Bauteilen zu schaffen, die eine exakte Führung der Werkstückträger bei einer derart starr verketteten Anlage gewährleistet.

Diese Aufgabe der Erfindung wird durch die Merkmale im Patentanspruch 1 gelöst. Es wird in den einzelnen Arbeitsbereichen eine exakte und genaue Führung der Werkstückträger unabhängig von einem eventuellem Durchhang oder von Schwingungen der Transportkette erreicht. Durch die Verwendung eigener Führungsleisten, Seitenführungsbahn und Preßvorrichtung wird auch eine hohe Führungsgenauigkeit unabhängig vom Material des Gehäuseteils erreicht. Weiters werden die einzelnen Kettenglieder völlig unabhängig von ihrer gelenkigen Verbindung untereinander exakt relativ zum Gehäuseteil geführt und positioniert. Zusätzliche überraschende Vorteile liegen darin, daß die Schwingungen der Kette während der Vorwärtsbewegung der durch die Kettenglieder gebildeten Werkstückträger von einer Arbeits- bzw. Montagestation zur nächsten erheblich verringert werden können und dadurch die Position der Bauteile auf den Werkstückträger einfach gehalten werden kann.

Es ist aber auch möglich, daß der Gehäuseteil einstückig und selbsttragend ausgebildet ist und zwei zueinander parallel verlaufende Führungsbahnen für einen gezogenen und einen rücklaufenden Strang der Transportkette lagert.

Nach einer anderen Ausführungsvariante ist vorgesehen, daß die Führungsbahnen über Stirnplatten, die die Führungs- und bzw. oder Kupplungsvorrichtungen lagern, miteinander verbunden sind, wodurch ein kompakter verwindungssteifer Bauteil als Gehäuseteil erreicht wird, der ohne zusätzliche Maßnahmen auch selbsttragende Eigenschaften besitzt.

Weiters ist es auch möglich, daß die Seitenführungsbahn durch längs der Führungsbahn mit im Abstand voneinander angeordneten Stützrollen gebildet ist, die auf in etwa senkrecht zur Oberseite der Gehäuseteile verlaufenden Achsen gelagert sind, wodurch die Genauigkeit der Führung auch über eine lange Betriebsdauer beibehalten werden kann.

Nach einer anderen Variante ist vorgesehen, daß die Stützrollen beidseits der Transportkette angeordnet sind, wodurch eine zentrale Führung der Kettenglieder erreicht wird.

Nach einer weiteren Ausführungsform ist vorgesehen, daß eine Tischplatte zur Aufnahme von Handhabungs- und bzw. oder Bearbeitungsvorrichtungen gegenüber den Gehäuseteilen relativ verschiebbar gelagert ist, wodurch in überraschend einfacher Weise erreicht werden kann, daß nach dem Spannen der Transportkette, die auf den Tischplatten angeordneten Montage- und bzw. oder Bearbeitungsvorrichtungen auf die Position der Werkstückträger bzw. Kettenglieder justiert werden können. Dadurch wird der Arbeitsaufwand zum Ausrichten der Montage- und bzw. oder Bearbeitungsvorrichtungen in den einzelnen Arbeitsstationen mit Vorteil verringert und es ist auch beim Nachspannen der Kette der Arbeitsaufwand und daher der Wartungsaufwand gering.

Weiters ist es auch möglich, daß zwischen den Führungsbahnen und den Stirnplatten ein Freiraum angeordnet ist, wodurch eine profilartige Ausbildung des Gehäuseteils und damit eine hohe Steifigkeit erzielt wird.

Es ist weiters aber auch möglich, daß die Tischplatte in dem Freiraum angeordnet ist und eine Länge der Tischplatte kleiner ist als eine Länge des Freiraums in Längsrichtung der Führungsbahnen, wodurch dieser Freiraum für die Anordnung der Tischplatte bevorzugt genutzt werden kann und günstig Abstützungsmöglichkeiten der Tischplatte in diesem Freiraum angeordnet werden können.

Vorteilhaft ist es aber auch, wenn im Freiraum Stützleisten für die Tischplatte angeordnet sind, da dadurch lediglich eine Justierung der Tischplatte bzw. der Werkstückträger zur Positionierung der Handhabungs- und bzw. oder Bearbeitungsvorrichtungen gegenüber der Transportkette notwendig ist.

Nach einer anderen Ausführungsvariante ist vorgesehen, daß in den Umlenkstationen eine Umlenkscheibe für die Transportkette angeordnet ist und zumindest einer von zwei den Gehäuseeinheiten zugeordneten Umlenkstationen ein Vorschubantrieb für die Umlenkscheibe zugeordnet ist, wodurch auch die Teile zur Umlenkung der Transportkette in größeren Stückzahlen und serienmäßig hergestellt werden können und untereinander austauschbar sind. Darüberhinaus wird mit einem Konstruktionsprinzip für die angetriebene und die mitlaufende Umlenkstation das Auslangen gefunden.

Vorteilhaft ist es auch, wenn die Umlenkscheibe mit einer sich in Längsrichtung der Transportkette erstreckenden Dämpfungs- und bzw. oder Einstellvorrichtung z.B. einer Gewindespindel bzw. einer Federanordnung verbunden ist, da dadurch die Stöße beim Anfahren der Transportkette gedämpft und eine ständige Justierung bei Abnützung der Transportkette in den Gelenkstellen durch Aufrechterhalten einer vordefinerten Spannung erzielbar ist.

Vorteilhaft ist es auch, wenn der Dämpfungsvorrichtung für die Umlenkscheibe eine Federblockiervorrichtung zugeordnet ist, da dadurch die Spannung der Kette und die Dämpfung von auf diese einwirkenden Schlägen vorteilhaft kombiniert werden kann.

Es ist aber auch möglich, daß beide Umlenkscheiben mit einem Vorschubantrieb gekoppelt sind und diesen Vorschubantrieben jeweils eine Dämpfungs- und bzw. oder Einstellvorrichtung und eine Federblockiervorrichtung zugeordnet ist, da bei Verwendung von zwei Umlenkstationen die mit Vorschubantrieben ausgestattet sind ein Vorschub der Transportkette in wechselnde Richtung möglich ist.

Nach einer anderen Ausführungsform ist vorgesehen, daß sich die Höhenführungsbahn in der Umlenkstation von dem dieser unmittelbar vorgeordneten Gehäuseteil bis über eine Antriebswelle bzw. der Umlenkscheibe erstreckt. Dadurch wird erreicht, daß die durch den Polygon-Effekt entstehenden unterschiedlichen Kettengeschwindigkeiten und Längenänderungen der Transportkette ausgeglichen werden können.

Weiters ist es auch möglich, daß eine Distanz zwischen der Höhenführungsbahn und der Drehachse bzw. Antriebswelle im Bereich des Scheitelpunktes der Umlenkscheibe größer ist als ein Radius eines Fußkreises der Umlenkscheibe und diese Distanz in Umfangsrichtung der Umlenkscheibe auf diesen Radius abnimmt. Durch die Ausbildung der Höhenführungsbahn greifen die Kettenglieder der Transportkette erst am Ende der Höhenführungsbahn im Bereich des Fußkreisdurchmessers der Umlenkscheibe ein, wodurch die Kettenglieder bzw. Werkstückträger auch im Bereich der Höhenführungsbahn des der Umlenkstation unmittelbar vorgeordneten Gehäuseteils waagrecht und spielfrei aufliegend geführt werden können.

Vorteilhaft ist es weiters, wenn die Höhenführungsbahn in der Umlenkstation einen über eine Längseinstellvorrichtung z.B. auf einer Führungssäule verschiebbare Klemmböcke positionierbaren Führungsleistenteil umfaßt, da dadurch auch beim Spannen der Transportkette, sowie bei Längenderung während des Betriebes eine ständige Nachjustierung der Führung der Kettenglieder in diesem Übergangsbereich zwischen Gehäuseteil und Umlenkstation möglich ist.

Von Vorteil ist aber auch eine Ausbildung, nach der die Höhenführungsbahn in der Umlenkstation aus zwei teleskopartig gegeneinander verschiebbaren Führungsleistenteilen besteht, da dadurch ein ruckfreier Übergang der Kettenglieder im Verstellbereich möglich ist.

Vorteilhaft ist auch eine Ausführungsform, nach der die Transportkette mit den Führungsbahnen zugeordneten Laufrollen versehen ist, die quer zur Kettenlängsrichtung voneinander distanziert sind und daß eine Breite der Führungsleistenteile kleiner ist als eine Breite einer Laufrolle die in die Umlenkscheibe eingreift, wodurch sowohl im Bereich der Führungsbahn als auch im Bereich der Umlenkscheibe eine Gleitreibung verhindert wird.

Es ist aber auch möglich, daß eine Länge eines Gehäuseteils ein Mehrfaches einer Breite desselben beträgt, wodurch der Zugang zu der Transportkette möglich ist und beispielsweise zum Zuführen von Teilen aus den Zuführvorrichtungen auf die Werkstückträger mit einem kurzen Hub von Handhabungsvorrichtungen das Auslangen gefunden werden kann.

Weiters ist es aber auch möglich, daß eine Länge eines Gehäuseteils in etwa einer Länge von drei Kettengliedern entspricht, wodurch über die Länge eines Gehäuseteils auch mehrere Arbeitsstationen hintereinander angeordnet werden können.

Nach einer anderen Ausführungsvariante ist vorgesehen, daß die Stützvorrichtung durch an Seitenflächen der Gehäuseteile bzw. Umlenkstation angeordnete L-förmige Stützen gebildet ist, die zwei ungleichlange Schenkel aufweisen, von welchen der Kürzere der Aufstandsfläche und der Längere dem Gehäuseteil bzw. der Umlenkstation zugeordnet ist, und daß vorzugsweise im gleichen Querschnittsbereich auf den einander gegenüberliegenden Seitenflächen spiegelbildlich je eine Stütze angeordnet ist, wodurch der Platzbedarf zum Abstützen der Anlage gering gehalten und eine gute Zugänglichkeit zu den einzelnen Teilen der Anlage erreicht wird.

Vorteilhaft ist es aber auch, wenn die Preßvorrichtung durch in radialer Richtung elastische Druckrollen gebildet ist und eine Distanz zwischen einer entspannten Druckrolle und der gegenüberliegenden Seitenführungsbahn kleiner ist als eine Breite der Transportkette bzw. der mit diesen gekuppelten Werkstückträger, wodurch während der gesamten Bewegung der Transportkette zwischen den Druckrollen und der Seitenführungsbahn eine spielfreie und ruckfreie Führung derselben gewährleistet ist.

Weiters ist es auch möglich, daß die Druckrollen und Stützrollen in Förderrichtung der Transportkette gegeneinander versetzt angeordnet sind, wodurch ein Schleudern der Werkstückträger bzw. Kettenglieder quer zu ihrer Förderrichtung ausgeschaltet werden kann.

Nach einer anderen vorteilhaften Ausgestaltung ist vorgesehen, daß die Druckrollen und bzw. oder die Stützrollen mit einem Antrieb z.B. einen Antriebsmotor oder einem Ketten- oder Riemenantrieb gekuppelt sind, da dadurch auch bei Anordnung zusätzlicher Gehäuseteile in einer bereits bestehenden Anlage ohne Änderung der Antriebsleistung des Vorschubantriebes in der Umlenkstation das Auslangen gefunden werden kann, da einige der Druckrollen oder alle zusätzlich mit einem Antrieb versehen werden können. Gleichzeitig ist es dadurch möglich, bestimmte Beschleunigungs- und Verzögerungswerte durch einen eigenen Antrieb für die Druckrollen zusätzlich zum Antrieb der Transportkette sicherzustellen.

Vorteilhaft ist es weiters, wenn der Vorschubantrieb ein Servoantrieb, beispielsweise ein elektrischer Schrittschaltmotor ist, da dadurch über den Vorschubantrieb die Positionierung der Werkstückträger bzw. Kettenglieder in den einzelnen Arbeitsbereichen erfolgen kann.

Zum besseren Verständnis der Erfindung wird diese im nachfolgenden anhand der in den Zeichnungen dargestellten Ausführungsbeispiele näher erläutert:

Es zeigen:
- Fig. 1: eine erfindungsgemäß ausgebildete Anlage in Seitenansicht in vereinfachter schematischer Darstellung;
- Fig. 2: die Anlage in Stirnansicht, geschnitten, gemäß den Linien II-II in Fig.1;
- Fig. 3: einen Gehäuseteil der erfindungsgemäßen Anlage mit der Transportkette und den Seiten- bzw. Höhenführungsbahnen und der Tischplatte in schaubildlicher und stark vereinfachter schematischer Darstellung;
- Fig. 4: den Werkstückträger nach Fig.3 in Stirnansicht, geschnitten, mit den diesen zugeordneten Seiten- und Höhenführungsbahnen des Gehäuseteils;
- Fig. 5: einen Gehäuseteil gemäß den Fig.1 bis 3 in Seitenansicht;
- Fig. 6: einen Übergangsbereich zwischen einem Gehäuseteil und einer Umlenkstation in Seitenansicht, geschnitten, gemäß den Linien VI-VI in Fig.7;
- Fig. 7: den Übergangsbereich zwischen dem Gehäuseteil und der Umlenkstation gemäß Fig.6 in Draufsicht;
- Fig. 8: die Umlenkstation in Stirnansicht, geschnitten, gemäß den Linien VIII-VIII in Fig.6;
- Fig. 9: einen erfindungsgemäß ausgebildeten aus einem Kettenglied bestehenden Teil einer Förderkette in Seitenansicht;
- Fig.10: den Werkstückträger nach Fig.9 in Draufsicht.

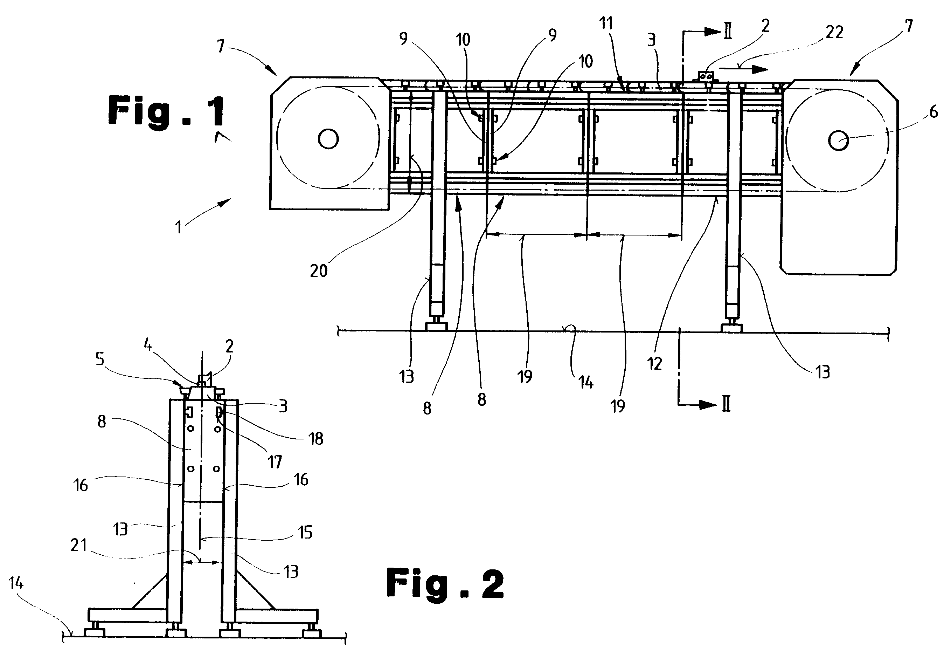

In Fig.1 ist eine Anlage 1 zur Bearbeitung und bzw. oder zur Montage von Bauteilen 2 gezeigt. Diese Bauteile 2 sind auf Werkstückträgern 3 angeordnet. Zur Halterung der Bauteile 2 auf den Werkstückträgern 3 sind Aufnahmen 4 mit dem Werkstückträger 3 verbunden bzw. an diesem einstückig angeformt. Die Werkstückträger 3 bilden im vorliegenden Ausführungsbeispiel eine Transportkette 5. Zum Vorschub der Transportkette 5 dient ein Vorschubantrieb 6 der im Bereich einer Umlenkstation 7 für die Transportkette 5 angeordnet ist. Zwischen den beiden Umlenkstationen 7 befinden sich mehrere Gehäuseteile 8, die im dargestellten Ausführungsbeispiel selbsttragend ausgebildet sind. Diese Gehäuseteile 8 weisen einander zugewandte Stirnplatten 9 auf, die untereinander über Führungs- und bzw. oder über Kupplungsvorrichtungen 10 zu einer selbsttragenden Gehäuseeinheit verbunden werden können. Senkrecht zu den Stirnplatten 9 verlaufen Führungsbahnen 11,12, wobei in der Führungsbahn 11 der gezogene Strang und in der Führungsbahn 12 der rücklaufende Strang der Transportkette 5 geführt ist. Über die Führungs- und bzw. oder Kupplungsvorrichtungen 10 zwischen den einzelnen Gehäuseteilen 8 bilden die aneinander gereihten Führungsbahnen 11 bzw. 12 der Gehäuseteile 8 eine durchgehende plane Führungseinrichtung für die Transportkette 5. Die aus den Gehäuseteilen 8 und den Umlenkstationen 7 gebildete Anlage 1 ist über Stützvorrichtungen 13 auf einer Aufstandsfläche 14 abgestützt.

Die Stützvorrichtungen 13 werden durch spiegelbildlich zu einer vertikalen Symmetrieebene 15 angeordnete L-förmige Stützen gebildet, die mit den Gehäuseteilen 8 im Bereich von Seitenwänden 16 mit diesen verbunden sind. Zur einfachen Befestigung der L-förmigen Stützen an den Seitenwänden 16 sind in längsverlaufende eine durchgehende Befestigungsvorrichtung bildende Montageleisten 17 vorgesehen. Diese Montageleisten 17 werden beispielsweise durch T-förmige Nuten gebildet, in die Nutensteine 18 mit einer der Nutenform angepaßten Querschnittsform eingesetzt werden, die an ihren den Stützvorrichtungen 13 zugewandten Enden beispielsweise mit einem Gewinde versehen sind, wobei über Muttern die Stützvorrichtungen 13 gegen die Seitenwände 16 der Gehäuseteile 8 gepreßt und gegenüber diesen fixiert werden. Ein Vorteil der Verwendung einer derartigen durchgehenden Befestigungsvorrichtung liegt darin, daß die Stützvorrichtungen 13 in beliebiger Lage längs der Anlage 1 positioniert werden können, um so die Anordnung von Arbeitsstationen bzw. diesen zugeordneten Handhabungs- oder Zuführgeräten nicht zu behindern. Gleichermaßen können diese durchgehenden Befestigungsvorrichtungen aber auch zum Fixieren der Endpositionen von Zuführgeräten bzw. Handhabungseinrichtungen dienen, wodurch sie in mehrfacher Weise ausnützbar sind.

Wie aus der Darstellung in Fig.1 und 2 ersichtlich, weisen die Gehäuseteile 8 einheitliche Abmessungen, wie eine Länge 19, eine Höhe 20 und eine Breite 21 auf. Dadurch ist ein nahtloses Aneinanderfügen der Gehäuseteile 8 sowie ein problemloser Austausch einzelner Gehäuseteile 8 ohne weiteres möglich. Durch die durchgehende Befestigungsvorrichtung in Form der Montageleiste 17 wird dabei noch ermöglicht, daß beim Austausch von einzelnen Gehäuseteilen 8 die unmittelbar anschließenden Gehäuseteile 8 provisorisch über Stützvorrichtungen 13 abgestützt werden können, sodaß beispielsweise der schadhafte Gehäuseteil 8 bzw. die im Bereich derselben angeordnete Arbeitsstation durch eine anders gestaltete Arbeitsstation einfach ersetzt werden kann.

Bei entsprechender Gestaltung der Befestigungsvorrichtung, insbesondere bei präziser Ausführung der Längsausrichtung dieser Befestigungsvorrichtung, ist es auch möglich, durch Einschieben von Gleitsteinen im Übergangsbereich zwischen benachbarten Gehäuseteilen 8 diese beiden Gehäuseteile über diesen Gleitstein sowohl der Höhe als auch der Seite nach zu positionieren und in ihrer Position zu fixieren. Eine derartige Ausbildung der Führungs- und bzw. oder Kupplungsvorrichtung 10 würde ermöglichen, daß die einzelnen Gehäuseteile 8 senkrecht zu einer Vorschubrichtung - Pfeil 22 - aus- bzw. eingebaut werden können.

Wie weiters ersichtlich, können die Stützvorrichtungen 13 mit senkrecht zur Aufstandsfläche 14 verstellbaren Fußelementen ausgestattet sein, um eine waagrechte Aufstellung der Anlage unabhängig von Unebenheiten im Bereich der Aufstandsfläche 14 zu ermöglichen.

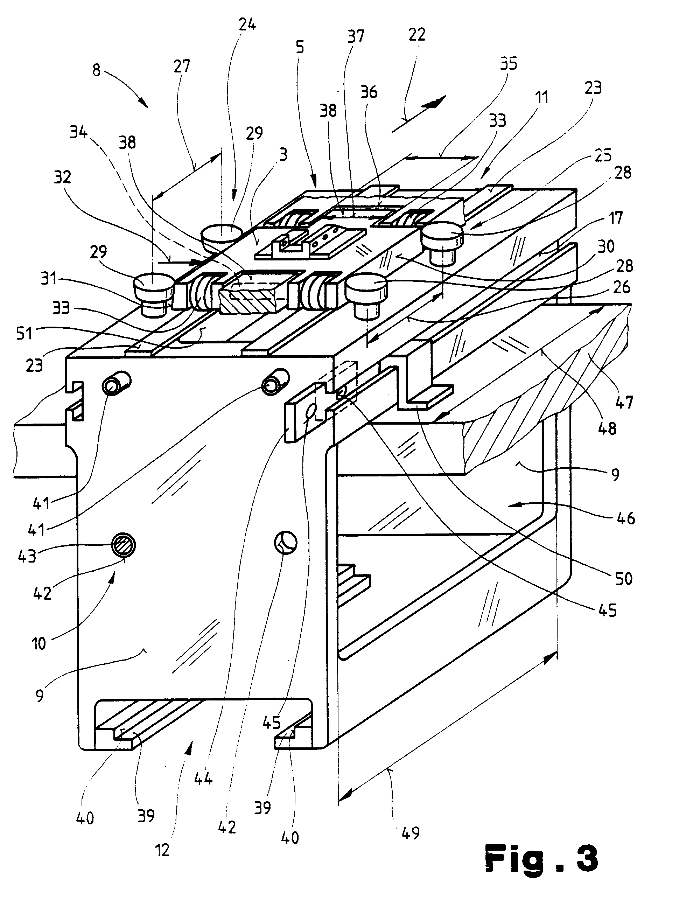

In Fig.3 ist ein Gehäuseteil 8 gezeigt. Die Führungsbahn 11 lagert den gezogenen Strang der Transportkette 5 und umfaßt zur Höhenführung der die Werkstückträger 3 bildenden Kettenglieder Führungsleisten 23. Zur Seitenführung dienen Seitenführungsbahnen 24,25 die durch in einem Abstand 26 bzw. 27 in Förderrichtung - Pfeil 22 - hintereinander angeordnete Stützrollen 28 und Druckrollen 29 gebildet sind. Die Stützrollen 28 sind dabei einer Seitenfläche 30 des Werkstückträgers 3 und die Druckrollen 29 einer dieser Seitenfläche 30 gegenüberliegenden Seitenfläche 31 zugeordnet. Durch die Druckrollen 29 wird auf die Werkstückträger 3 eine durch einen Pfeil 32 angedeutete Druckkraft in Richtung der Stützrollen 28 ausgeübt. Dadurch wird erreicht, daß die Werkstückträger 3 quer zur Fortbewegungsrichtung gemäß Pfeil 22 eine exakte Position einnehmen, die bis auf einen Bruchteil eines Millimeters genau ist. Die exakte Höhenführung wird dabei durch die Führungsleisten 23 sichergestellt.

Um über einen langen Zeitraum eine exakte Höhen- und Seitenführung der Werkstückträger 3 zu ermöglichen, sind diese auf den Führungsleisten 23 über Laufrollen 33 abgestützt. Diese Laufrollen 33 sind auf einer als Kettenbolzen 34 dienenden Achse gelagert. Der Kettenbolzen 34 verbindet jeweils zwei unmittelbar aufeinanderfolgende Werkstückträger 3, die gleichzeitig die Kettenglieder bilden, zur gemeinsamen Fortbewegung in Richtung senkrecht zu den Führungsleisten 23 also in Höhenrichtung und in Vorschubrichtung - gemäß Pfeil 22 - also in Längsrichtung bzw. Transportrichtung. Die Höhenführung des Werkstückträgers 3 erfolgt dadurch jeweils über die Laufrollen 33 sowie über die dem unmittelbar vorgeordneten Werkstückträger zugeordneten Laufrollen 33, wobei sich der Werkstückträger 3 jeweils über die Kettenbolzen 34 auf diesen Laufrollen 33 abstützt. Um nunmehr für jeden Werkstückträger 3 eine unabhängige Positionierung der Seite nach zu ermöglichen, ist eine Breite 35 einer Ausnehmung 36 im Werkstückträger 3 größer als eine Breite 37 eines auf dem Kettenbolzen 34 gelagerten Kupplungsfortsatzes 38. Dadurch ist es möglich, daß die einander unmittelbar aufeinanderfolgenden Kettenglieder bzw. Werkstückträger 3 seitlich relativ zueinander verstellt werden können und die Seitenjustierung der Werkstückträger 3 daher nur von der Lage der Seitenführungsbahn 25 und nicht von der Lage der Transportkette 5 als solches beeinflußt ist.

Wie weiters aus dieser Darstellung ersichtlich, ist der Gehäuseteil 8 einstückig ausgebildet und weist neben der Führungsbahn 11 auf seiner Unterseite auch eine durch Führungsleisten 39 gebildete Führungsbahn 12 auf, in der der rücklaufende Strang der Transportkette 5 über die Laufrollen 33 geführt ist. Zur Seitenführung der Werkstückträger 3 dienen im Bereich dieser Führungsleisten 39 senkrechte Führungsflächen 40. Durch diese soll ein Schleudern der Werkstückträger verhindert werden. Die beiden die Führungsbahnen 11 und 12 aufnehmenden Teile sind über die Stirnplatten 9 miteinander verbunden. In dieser Stirnplatte 9 sind Paßstifte 41 und Bohrungen 42 für Paßschrauben oder Schrauben 43 angeordnet, die gemeinsam die Führungs- und bzw. oder Kupplungsvorrichtung 10 bilden. Weiters ist die durchgehende Befestigungsvorrichtung die als Montageleiste 17 mit einem T-förmigen Querschnitt gebildet ist, gezeigt. Anstelle der Paßstifte 41 kann eine in der Montageleiste 17 spiegelfrei geführte Kupplungsleiste 44 zum niveaugleichen Verbinden der Gehäuseteile 8 verwendet werden. Ist diese Kupplungsleiste 44 mit Bohrungen 45 versehen, so kann über die Bohrungen 45 und darin eingesetzte Schrauben auch die Kupplung der einander benachbarten Gehäuseteile 8 erfolgen.

Von den Führungsbahnen 11,12 und den Stirnplatten 9 wird ein Freiraum 46 begrenzt, in welchem eine Tischplatte 47 angeordnet ist.

Eine Länge 48 der Tischplatte 47 ist dabei geringer als eine Länge 49 des Freiraumes 46. Dadurch ist es im begrenzten Ausmaß möglich, die Tischplatte 47 in Vorschubrichtung - Pfeil 22 - gegenüber dem Gehäuseteil 8 zu verschieben und zu positionieren. Die Führung und Befestigung der Tischplatte 47 kann dabei wie schematisch angedeutet, über Haltebügel 50 erfolgen, die in der Montageleiste 17 eingehängt sind.

Aus der Zeichnung ist weiters ersichtlich, daß zwischen den Führungsleisten 23 eine Öffnung 51 angeordnet ist, innerhalb welcher ein Zugang zu den Werkstückträgern 3 von unten her möglich ist. Dadurch können zusätzliche Abstützungen des Werkstückträgers 3 vor allem in jenen Stationen in welchen beim Montieren bzw. beim Mieten oder Einpreßen von Teilen eine Entlastung der Laufrollen 33 des Werkstückträgers 3 notwendig ist, vorgesehen werden, bzw. ist es auch möglich, im Werkstückträger 3 drehbare Teile vorzusehen, die in einzelnen Stationen durch von unten her auf den Werkstückträger 3 einwirkende Antriebe in unterschiedliche Drehstellungen verstellt werden können.

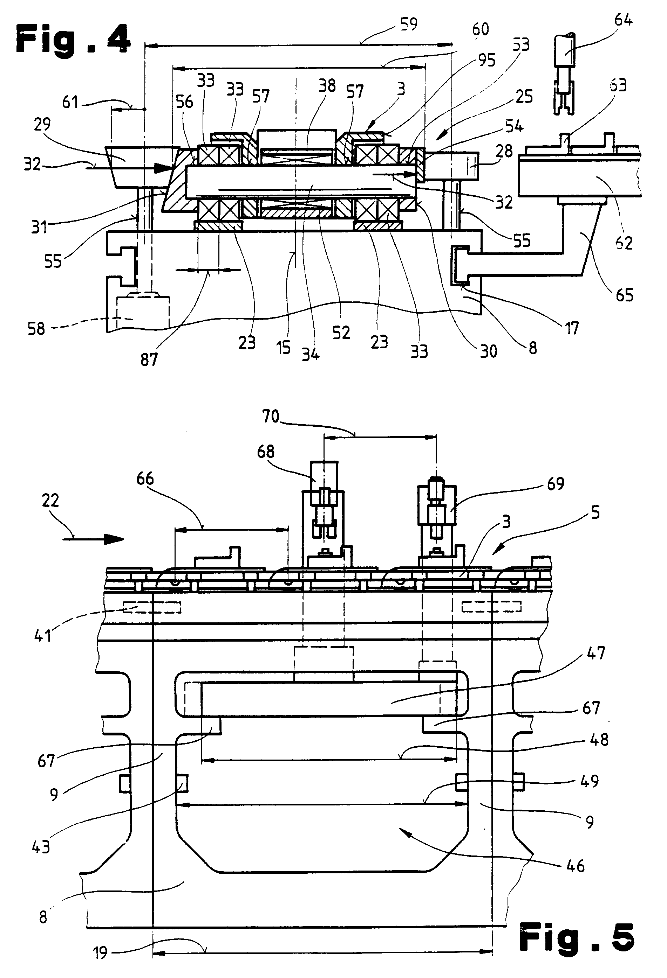

In Fig.4 ist die Anordnung des Kettenbolzens 34 sowie dessen Lagerung im Kupplungsfortsatz 38 bzw. im Werkstückträger 3 gezeigt. Der Kettenbolzen 34 ist im Kupplungsfortsatz 38 in einem Lager 52 insbesondere einem Rollen- bzw. Nadellager abgestützt. Er durchsetzt in einer Bohrung 53 die Seitenfläche 30 des Werkstückträgers 3. Dem Ende des Kettenbolzens 34 ist im Bereich der Seitenfläche 31 eine Seitenführungsleiste 54 vorgeordnet, die ihn gegen Bewegungen quer zur Vorschubrichtung fixiert. Diese Seitenführungsleiste 54 die beispielsweise aus einem gehärteten bzw. nitrierten Metallstreifen bestehen kann, dient als Anlage für die Stützrollen 28, die um vertikale Achsen 55 drehbar sind, die ihrerseits im Gehäuseteil 8 abgestützt bzw. befestigt sind. Im Bereich der gegenüberliegenden Seitenfläche 31 ist der Kettenbolzen 34 in einem Sackloch 56 gelagert. Weitere Bohrungen 57 im Werkstückträger 3 sind als Preßsitz zur Aufnahme und Halterung des Kettenbolzen 34 ausgebildet. Zwischen diesen Bohrungen 57 und dem Sackloch 56 bzw. der Bohrung 57 und der Bohrung 53 sind nebeneinander zwei Laufrollen 33 angeordnet. Diese Laufrollen 33 sind ebenfalls durch Wälzlager gebildet. Aufgrund der gewählten Konstruktion ist es daher in einfacher Weise möglich, die Transportkette 5 nahezu spielfrei bzw. über lange Zeit abnützungsfrei zu betreiben, da die Führung des Werkstückträgers 3 gegenüber den Führungsleisten 23 in Form einer Rollreibung durch Abwälzen der Laufrollen 33 auf den Führungsleisten 23 erfolgt. Gleichermaßen werden die Bewegungen zwischen den einander unmittelbar aufeinanderfolgenden Werkstückträgern 3 vor allem im Bereich der Umlenkstation 7 über das Lager 52 vorgenommen, sodaß es auch in diesem Bereich zu einer Rollreibung und nicht zu einer Gleitreibung kommen kann. Selbstverständlich ist es möglich, anstelle der gezeigten Wälzlager Gleitlager zu verwenden oder es ist andererseits auch möglich, den Kettenbolzen 34 anstelle der als Preßsitz ausgebildeten Bohrungen 57 über andere Maßnahmen gegen ein Verdrehen in den einzelnen Lagern 52 bzw. Bohrung 53 zu sichern.

Wie aus dieser Darstellung weiters zu ersehen ist, ist die Seitenfläche 31 schräg zur Symmetrieebene 15 verlaufend ausgebildet. Die Distanz dieser Seitenfläche 31 wird mit zunehmendem Abstand von den Führungsleisten 23 gegenüber der vertikalen Symmetrieebene 15 geringer. Gleichermaßen sind die der Seitenfläche 31 zugeordneten Druckrollen 29 konisch und zwar gegen den Gehäuseteil 8 zu sich verjüngend ausgebildet. Die Druckrollen 29 sind dabei ebenfalls über vertikale Achsen 55, die im Gehäuseteil 8 befestigt sind, drehbar gelagert. Wie durch strichlierte Linien angedeutet können diese Achsen 55 der Druckrollen 29 auch mit einem Antriebsmotor 58 gekuppelt sein, der die Vorschubbewegung des Vorschubantriebs 6 unterstützt.

Um eine spielfreie Führung der Werkstückträger 3 entlang der durch die Stützrollen 28 gebildeten Seitenführungsbahn 25 zu ermöglichen, ist eine Distanz 59 zwischen den Achsen 55 der Druckrollen 29 und der Stützrollen 28 geringer, als eine Breite 60 des Werkstückträgers 3 zuzüglich eines Radius der Stützrolle 28 und eines Radius 61 der in radialer Richtung elastischen Druckrolle 29. Durch die in radialer Richtung elastisch verformbare Druckrolle 29 wird in Richtung der Stützrollen 28 eine in Richtung des Pfeils 32 verlaufende Druckkraft ausgeübt, durch die eine spielfreie Anlage des Werkstückträgers 3 an den Stützrollen 28 erreicht wird. Gleichzeitig wird durch die konische Ausbildung der Druckrollen 29 auch eine in Richtung der Führungsleisten 23 gerichtete Druckkraft ausgeübt, die zu einem spielfreien Aufliegen des Werkstückträgers 3 bzw. des Kettengliedes auf diesen Führungsleisten 23 führt. Dadurch wird erreicht, daß trotz der Ausbildung des Werkstückträgers 3 als Kettenglied eine spielfreie Führung desselben entlang der Seitenführungsbahn 25 möglich ist.

Wie weiters in Fig.4 gezeigt, ist es durch die Montageleiste 17 möglich, ein Ende einer Linearförderstrecke 62 eines Zuführgeräts in seiner Lage gegenüber dem Gehäuseteil 8 exakt zu positionieren, sodaß bei einer Entnahme von Einzelteilen 63 diese mit einem schematisch angedeuteten Greifer 64 immer exakt an der richtigen Stelle erfaßt und zur Ablage auf den Werkstückträger 3 verbracht werden können.

Durch diese Abstützung der Linearförderstrecke 62 über eine Stützkonsole 65 in der Montageleiste 17 ist eine Positionierung der Linearförderstrecke sowohl der Höhe nach als auch in Richtung quer zur Fortbewegungsrichtung und natürlich auch in Fortbewegungsrichtung möglich.

In Fig.5 ist ein Gehäuseteil 8 in Seitenansicht dargestellt, woraus zu ersehen ist, daß die Länge 19 des Gehäuseteils 8 einem mehrfachen einer Kettengliedlänge 66 im vorliegenden Fall dem dreifachen einer derartigen Kettengliedlänge 66 entspricht. Selbstverständlich ist es auch möglich, daß die Länge 19 des Gehäuseteils 8 nur dem zweifachen einer Kettengliedlänge 66 entspricht. Dadurch wird in vorteilhafter Weise erreicht, daß eine beliebige Anzahl von Gehäuseteilen 8 aneinandergereiht werden kann, da die Länge der Kette immer exakt um drei Kettenglieder oder zwei Kettenglieder verlängert werden kann. Stellt dagegen die Kettengliedlänge 66 keinen ganzen Teil der Länge 19 des Gehäuseteils 8 dar, so muß bei einer Verlängerung der Anlage 1 immer auf die notwendige Kettenteilung Rücksicht genommen werden bzw. die dadurch entstehende Distanz durch einen entsprechenden Verstellweg sowohl in den gezogenen als auch für den rücklaufenden Kettenstrang im Bereich der Umlenkstation 7 ausgeglichen werden.

Die Tischplatte 47 ist im Freiraum 46 auf an den Stirnplatten 9 befestigten Stützleisten 67 abgestützt. Nachdem die Länge 49 des Freiraums 46 größer ist als die Länge 48 der Tischplatte 47 kann die Tischplatte 47 in Vorschubrichtung - Pfeil 22 - relativ gegenüber dem Gehäuseteil 8 verstellt werden. Auf dieser Tischplatte 47 ist ein Handhabungsgerät 68 und beispielsweise eine Schraubvorrichtung 69 befestigt. Nach dem Zusammensetzen der Transportkette 5 und deren Spannung werden nun die durch den taktweisen Vorschub der Werkstückträger 3 sich ergebenden Arbeitsstellungen durch die Transportkette 5 festgelegt. Da die Lage der Kettenglieder nach jeder Vorschubbewegung jedoch vom Spannweg und von mehreren äußeren Faktoren der Anlage 1 abhängig ist, ist es nach dem Fertigstellen und Zusammenbauen der Transportkette 5 notwendig, die Handhabungsgeräte 68 bzw. die Schraubvorrichtung 69 und andere Arbeitsvorrichtungen auf die Stellung der Kettenglieder einzujustieren. Dazu war es bisher notwendig, die einzelnen Handhabungsgeräte bzw. Schraubvorrichtungen und andere Arbeitsvorrichtungen einzeln auf den Tischplatten zu positionieren und jeweils in eine zu ihrer Arbeitsposition am Werkstückträger 3 bzw. Kettenglied fluchtenden Stellung zu verbringen. Durch die Anordnung und Ausbildung der Tischplatte 47 gemäß der Darstellung in Fig.5 ist es nunmehr aber möglich, die im exakten Teilungsmaß 70 angeordneten Geräte bzw. Vorrichtungen auf einmal mit der Tischplatte 47 in Vorschubrichtung - Pfeil 22 - oder entgegen der Vorschubrichtung zu verschieben, wodurch eine Ausrichtung auf die Werkstückträger 3 möglich ist. Damit können durch eine Einstellung der Tischplatte 47 gegenüber dem Gehäuseteil 8 alle darauf angeordneten Geräte bzw. Vorrichtungen auf ihre exakte Arbeitsposition am Werkstückträger justiert werden. Dies hatte den Vorteil, daß bei einem Nachspannen der Kette oder beim Austauschen eines Kettengliedes aufgrund eines Defektes oder dgl. die Betriebsbereitschaft der Anlage und die exakte Funktion derselben rasch wieder hergestellt werden kann.

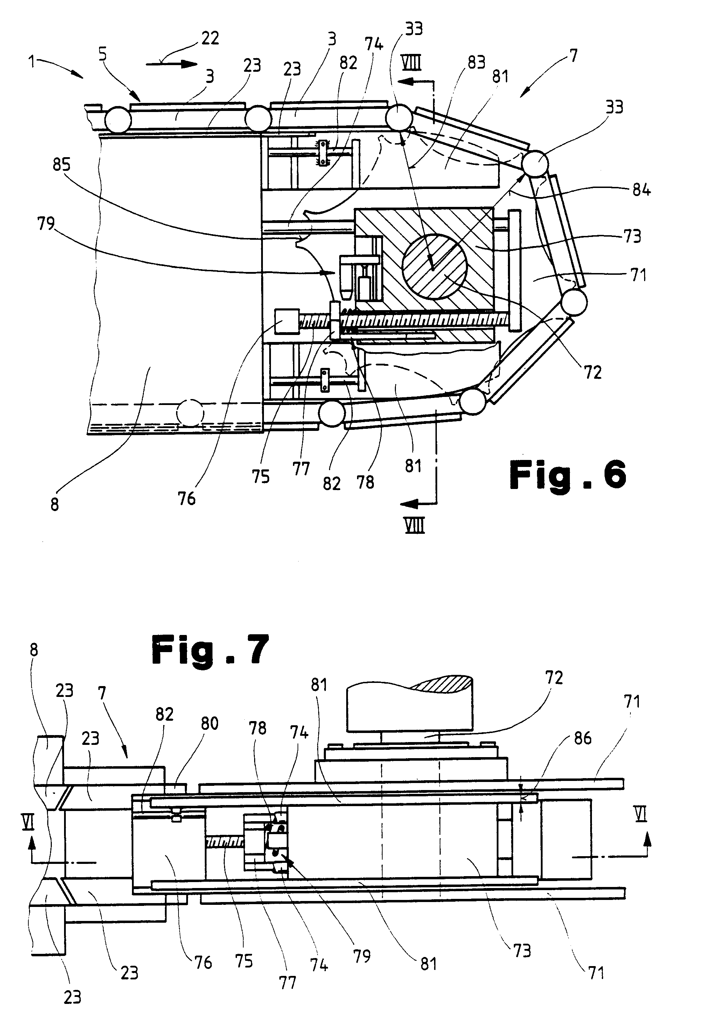

In Fig.6 ist die Anlage 1 im Übergangsbereich zwischen einer Umlenkstation 7 und einem dieser unmittelbar benachbarten Gehäuseteil 8 gezeigt. Die Umlenkstation 7 umfaßt eine Umlenkscheibe 71, die als Kettenrad ausgebildet ist und die auf einer Antriebswelle 72 gelagert ist. Die Antriebswelle 72 ist in einem Gehäuse 73 angeordnet, welches auf Führungssäulen 74 in Vorschubrichtung - Pfeil 22 - verschiebbar gelagert ist. Zum Verstellen des Gehäuses 73 ist eine Gewindespindel 75 angeordnet, die über einen Verstellmotor 76 in Drehung versetzt werden kann. Über eine gegenüber dem Gehäuse 73 verdrehsicher gelagerte Wandermutter 77 kann dieser unter Zwischenschaltung einer Federanordnung 78 in oder entgegen der Richtung des Pfeiles 22 verschoben werden. Dadurch ist es möglich, die Transportkette 5, die aus den die Kettenglieder bildenden Werkstückträgern 3 gebildet ist, in ausreichenden Maß zu spannen. Wird die Umlenkscheibe 71 nur zur Umlenkung und nicht zum Antrieb der Transportkette 5 verwendet, so können eventuelle Schläge und Stöße durch die Federanordnung 78 ausgeglichen werden. Wird dagegen die Transportkette 5 über die Antriebswelle 72 und die Umlenkscheibe 71 angetrieben, so kann über eine Federblockiervorrichtung 79 die Wirkung der Federanordnung 78 ausgeschalten werden, sodaß die Transportkette 5 präzise vorwärts transportiert wird. Diese Federblockiervorrichtung 79 besteht im dargestellten Ausführungsbeispiel durch einen zwischen die Wandermutter 77 und das Gehäuse 73 einführbaren Distanzklotz der mittels eines Zylinders relativ gegenüber dem Gehäuse 73 verstellt werden kann. In der in vollen Linien dargestellten Ruhestellung ist die Federanordnung 78 in Funktion während beim Absenken des Blockierklotzes eine starre Verbindung zwischen Wandermutter 77 und Gehäuse 73 gegeben ist.

Sind beide Umlenkstationen 7 entsprechend der Darstellung in Fig.6 ausgebildet, so kann die Transportkette 5 wahlweise in oder entgegen der durch den Pfeil 22 angedeuteten Fortbewegungsrichtung bewegt werden, wobei wahlweise bei dem die Transportkette 5 antreibenden Kettenrad die Federblockiervorrichtung 79 aktiviert ist, während bei der nichtangetriebenen Umlenkscheibe 71 die Federblockiervorrichtung außer Eingriff ist, wie sie in Fig.6 dargestellt ist.

Aus den Fig.6 und 7 ist weiters ersichtlich, daß die Führungsleisten 23 im Bereich der Umlenkstation 7 einen feststehenden Führungsleistenteil 80 und einen beweglichen Führungsleistenteil 81 umfassen. Der bewegliche Führungsleistenteil 81 ist entlang von Führungssäulen 82 verstellbar gelagert und kann auf diesen festgeklemmt werden. Wie besser aus Fig.6 zu ersehen ist, sind die Führungsleistenteile 81 in Richtung des Pfeils 22 gekrümmt und weisen von der Antriebswelle 72 bzw. der Drehachse der Umlenkscheibe 71 eine Distanz 83 auf, die größer ist als ein Radius 84 eines Fußkreises der Umlenkscheibe 71. Diese Distanz 83 im Bereich des den Führungsleisten 23 zugewandten Scheitelpunktes der Umlenkscheibe 71 nimmt in einem an diesen Scheitelpunkt in Uhrzeigerrichtung folgenden Quadranten auf den Radius 84 ab.

Die Verstellbarkeit entlang der Führungssäulen 82 ist deshalb erforderlich, da sich durch das Verschieben der Antriebswelle 72 zum Spannen der Transportkette 5 die Einlaufverhältnisse zwischen den durch die Werkstücksträger 3 gebildeten Kettengliedern insbesondere den auf den Kettenbolzen 34 angeordneten Laufrollen 33 und den Zahnlücken 85 der Umlenkscheibe 71 ändern. Eine Führung der Laufrollen 33 im Übergangsbereich zur Umlenkscheibe 71 ist deshalb notwendig, um die durch den Polygoneffekt unterschiedlichen Kettengeschwindigkeiten auszugleichen. Diese treten vor allem bei erfindungsgemäßen Anlagen dadurch auf, daß die Länge der einzelnen Kettenglieder - da diese als Werkstückträger 3 wirken - relativ groß ist und aus Platzgründen die Umlenkscheibe 71 nicht mit einem so großem Durchmesser so groß ausgebildet werden kann, daß sie zumindest sechzehn Zähne umfaßt. Aber erst ab einer Zähnezahl von sechzehn Zähnen tritt der Ungleichförmigkeitsgrad praktisch nicht mehr in Erscheinung.

Ein weiterer Vorteil der erfindungsgemäßen Lösung liegt darin, daß jeder Führungsleiste 23 zwei parallel zueinander angeordnete Laufrollen 33 zugeordnet sind. In der Umlenkstation 7 ist nun eine Breite 86 des Führungsleistenteils 81 geringer als eine Breite 87 - Fig.4 - einer Laufrolle 33. Die zweite der gleichen Führungsleiste 23 zugeordnete Laufrolle 33 ist dem Führungsleistenteil 80 zugeordnet, der im Überschneidungsbereich mit dem Führungsleistenteil 81 ebenfalls eine der Breite 86 entsprechende Breite aufweist. Fluchtend mit dem Führungsleistenteil 80 ist dann jeweils die einer der beiden Führungsleisten 23 zugeordnete Umlenkscheibe 71 angeordnet. Die Verwendung zweier Laufrollen 33 ermöglicht es nun die unterschiedlichen Relativgeschwindigkeiten beim Einlaufen der Laufrollen 33 in Zahnlücken 85 auszugleichen. Während nämlich die auf der Führungsleistenteil 81 rollende Laufrolle 33 sich entsprechend der Vorwärtsbewegung der Transportkette 5 abwälzt, kommt es beim Eingreifen der zweiten Laufrolle 33 in die Zahnlücke 85 zu einer zusätzlichen Relativbewegung, die durch eine zusätzliche radiale Relativbewegung zwischen der Umlenkscheibe 71 und der Laufrolle 33 bzw. dem Werkstückträger 3 bedingt ist. Würde nun anstelle von zwei jeweils einer Führungsleiste 23 zugeordneten Laufrollen 33 nur eine einzige vorhanden sein, so würde es entweder zwischen der Zahnlücke und dieser Laufrolle oder zwischen der den Führungsleistenteil 81 und der dieser zugeordneten Laufrolle zu einer Gleitreibung kommen. Dies kann durch die Anordnung von zwei einander benachbarten voneinander unabhängig bewegbaren Laufrollen vermieden werden.

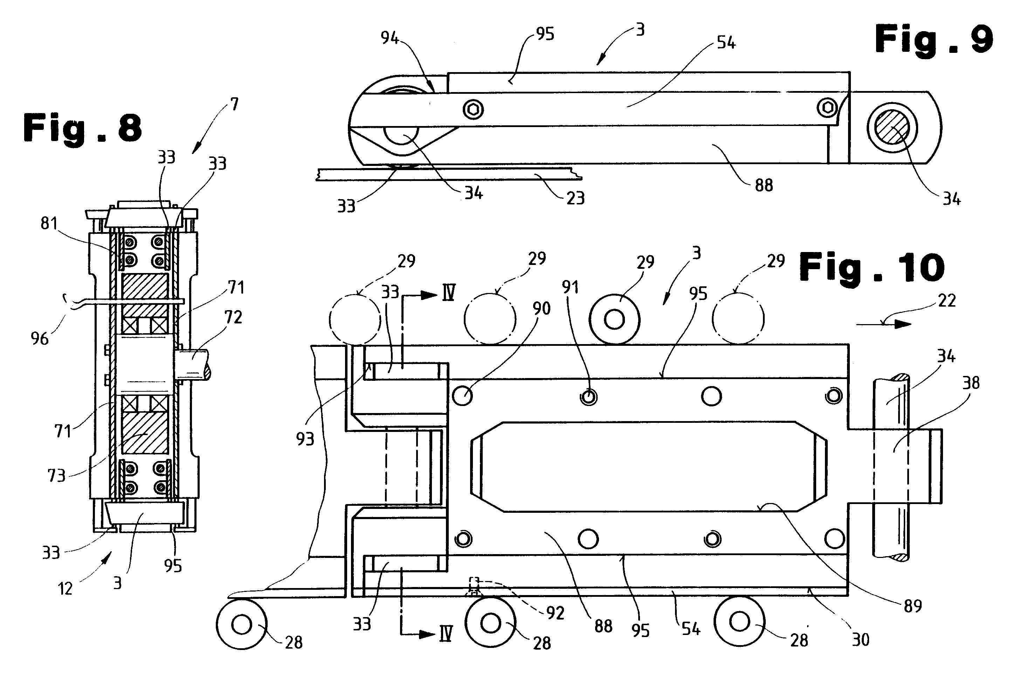

In Fig.8 ist die Zuordnung der einzelnen Laufrollen 33 zu den Führungsleistenteilen 80 und 81 im Bereich der Umlenkstation 7 gezeigt.

Weiters ist aus dieser Darstellung ersichtlich, daß durch die Anordnung der Laufrollen 33, wie dies anhand der Fig.9 und 10 noch näher erläutert werden wird, die Werkstückträger 3 auch beim Rücktransport in der Führungsbahn 12 über die Laufrollen 33 geführt sind. Dadurch kommt es auch beim Rücktransport der Werkstückträger im rücklaufenden Strang zu keiner Gleitreibung zwischen dem Werkstückträger 3 und der Führungsbahn 12. Dies verhindert eine zu starke Abnützung dieser Teile bzw. ermöglicht es mit einem geringen Kraftaufwand das Auslangen zu finden.

In den Fig.9 und 10 ist ein als Kettenglied dienender Werkstückträger 3 in größerem Maßstab gezeigt. Dieser besteht aus einem Grundkörper der im Mittelbereich mit einer Öffnung 89 bzw. einem Durchbruch versehen ist. Durch diese Öffnung 89 bzw. den Durchbruch ist es möglich, den Bauteil auch von der Unterseite der Führungsbahn 11 her zu bearbeiten. Weiters sind im Grundkörper 88 Bohrungen 90 und Gewindebohrungen 91 angeordnet, um eine Trägerplatte bzw. eine Montageplatte zur Halterung und Positionierung der zusammenzubauenden Einzelteile bzw. für den fertigen Bauteil aufzunehmen.

Auf der Seitenfläche 30 ist die Seitenführungsleiste 54 über Senkschrauben 92, von welchen eine gezeigt ist, befestigt. In einem dem in Förderrichtung - Pfeil 22 - nachfolgenden Werkstückträger 3 zugewandten Endbereich weist der Grundkörper 88 den Kupplungsfortsatz 38 auf, der von dem Kettenbolzen 34 durchsetzt wird. Der die Laufrollen 33 aufnehmende Kettenbolzen 34 wird durch die Seitenführungsleiste 54 in seiner Seitenposition gehalten. Außerdem ist eine Ausnehmung 93 im Bereich einer der beiden Laufrollen 33 vorgesehen, sodaß diese auf der von der Führungsleiste 23 abgewendeten Seite über einen Führungsansatz 94 vorragt. Eine Seitenwand 95 dieses Führungsansatzes 94 dient, wie dies besser aus den Fig.4 und 8 zu ersehen ist, zur Seitenführung der Werkstückträger 3 bzw. Kettenglieder im rücklaufenden Strang im Bereich der Führungsbahn 12. Dadurch ist es möglich, daß der gesamte sich zwischen den Seitenwänden 95 befindliche Bereich des Grundkörpers 88 zwischen den Führungsleisten 39 und den Führungsflächen 40 der Führungsbahn 12 erstrecken kann und eventuell noch auf dessen Oberfläche liegende Einzelteile bzw. Bauteile im rücklaufenden Strang frei nach unten abfallen können und vor alllem nicht die Gefahr besteht, daß sie sich zwischen den Führungsleisten bzw. -flächen 39,40 und den Werkstückträgern 3 verklemmen.

Der Vorschubantrieb 6 kann durch jede beliebige Antriebsanordnung gebildet sein. So können unter anderem elektrische Winkelschrittmotoren oder andere Arten von Schrittschaltmotoren oder auch mechanisch begrenzte Antriebsmotoren Verwendung finden. Es ist auch möglich entsprechende pneumatische oder hydraulische Antriebe mit Servosteuerungen zu verwenden. Die Geschwindigkeitsregelung kann dabei so erfolgen, daß der Antrieb nicht abrupt mit der vollen Vorschubgeschwindigkeit beaufschlagt wird, sondern über eine Beschleunigungskurve die Geschwindigkeit immer mehr zunimmt um vor dem Ende des Vorschubes in einer Verzögerungsphase auf Null abzunehmen. Dadurch kann verhindert werden, daß lose auf den Kettengliedern bzw. Werkstückträgern 3 aufliegende Teile davonfliegen können.

Wie weiters in Fig.10 gezeigt, ist es möglich, daß die Druckrollen 29 in Vorschubrichtung - Pfeil 22 - in einem doppelt so großem Abstand angeordnet sind, wie die Stützrollen 28, wobei sie sich jeweils mittig zwischen zwei einander benachbarten gegenüberliegenden Stützrollen 28 befinden. Weiters ist es auch möglich, die Druckrollen 29 und die Stützrollen 28 in einen gleichmäßigen Abstand in Vorschubrichtung - Pfeil 22 - jedoch um die Hälfte ihres Abstandes zueinander versetzt anzuordnen, wie dies durch eine zusätzliche in strichlierten Linien gezeichnete Druckrolle 29 gezeigt ist. Es ist aber auch möglich, die Druckrollen 29 den Stützrollen 28 direkt gegenüberliegend anzuordnen, wie dies durch strichpunktiert eingezeichnete Druckrollen 29 schematisch angedeutet ist. Als vorteilhaft kann es sich hierbei erweisen, wenn die in vollen Linien gezeichneten Druckrollen 29 eine höhere Druckkraft in Richtung der gegenüberliegenden Stützrollen 28 ausüben, als die mit strichlierten Linien gezeichneten Druckrollen 29. Dadurch kann in einfacher Weise sichergestellt werden, daß der Arbeitsstation der Werkstückträger 3 in einer Dreipunkt-Einspannung zwischen zwei Stützrollen 28 und der mittig zwischen diesen angeordneten Druckrolle 29 positioniert ist. Die in strichlierten Linien gezeichneten Druckrollen 29 verhindern dann lediglich bei der Vorwärtsbewegung der Kette, daß es zu einem Schleudern der Werkstückträger 3 bzw. Kettenglieder oder einem Ecken der Transportkette 5 kommen kann.

Zum Justieren der Transportkette sowie zum Nullen des Vorschubantriebes ist das Gehäuse 73 mit einer parallel zur Antriebswelle 72 verlaufenden Bohrung durchsetzt, in die bei korrespondierender Stellung von in den Umlenkscheiben 71 angeordneten Bohrungen ein Zentrierstift 96 eingesetzt werden kann. Nach dem Einsetzen des Zentrierstiftes 96 durch die eine exakte Position der Kette gegenüber der Umlenkscheibe 71 bzw. dem Gehäuseteilen 8 festgelegt ist, kann beispielsweise ein Drehgeber für einen Winkelschrittmotor auf Null gestellt werden, sodaß durch die Vorschubbewegung im darauffolgenden Taktbetrieb die Werkstückträger 3 immer an der exakt gleichen Stelle entlang der Gehäuseteile 8 angehalten werden.

Lediglich der Ordnung halber sei noch darauf hingewiesen, daß es selbstverständlich auch möglich ist, die Seitenführungsbahnen 24 und 25 durch Führungsleisten zu bilden, die mit im Werkstückträger 3 angeordneten Führungsrollen zusammenwirken. Dabei ist es möglich beispielsweise die die Seitenführungsbahn 24 bildende Anschlagleiste unter Federvorspannung in Richtung der Seitenführungsbahn 25 vorzuspannen, sodaß auch in diesem Fall eine spielfreie Führung der Werkstückträger 3 bzw. Kettenglieder entlang der Seitenführungsbahn 25 erreicht werden kann. Andererseits ist es aber auch möglich, die zwischen der Führungsleiste der Seitenführungsbahn 24 und dem Werkstückträger 3 angeordneten Führungsrollen aus in radialer Richtung elastischem Material herzustellen, sodaß durch diese Rollen die Anpresskraft in Richtung der Seitenführungsbahn 25 gegeben ist.

Selbstverständlich ist es auch möglich, daß die Dämpfungsvorrichtung anstelle einer Spiralfeder durch Gummifederblöcke, Gasfedern oder anderes gebildet sein kann. Auch kann die Einstellvorrichtung durch Pneumatik- oder Hydraulikantriebe gebildet sein, wobei in diese die Dämpfungsvorrichtung auch integriert sein kann.

### Bezugszeichenaufstellung

- 1: Anlage
- 2: Bauteil
- 3: Werkstückträger
- 4: Aufnahme
- 5: Transportkette
- 6: Vorschubantrieb
- 7: Umlenkstation
- 8: Gehäuseteil
- 9: Stirnplatte
- 10: Führungs- u. Kupplungsvorrichtung
- 11: Führungsbahn
- 12: Führungsbahn
- 13: Stützvorrichtung
- 14: Aufstandsfläche
- 15: Symmetrieebene
- 16: Seitenwand
- 17: Montageleiste
- 18: Nutenstein
- 19: Länge
- 20: Höhe
- 21: Breite
- 22: Pfeil
- 23: Führungsleiste
- 24: Seitenführungsbahn
- 25: Seitenführungsbahn
- 26: Abstand
- 27: Abstand
- 28: Stützrolle
- 29: Druckrolle
- 30: Seitenfläche
- 31: Seitenfläche
- 32: Pfeil
- 33: Laufrolle
- 34: Kettenbolzen
- 35: Breite
- 36: Ausnehmung
- 37: Breite
- 38: Kupplungsfortsatz
- 39: Führungsleiste
- 40: Führungsfläche
- 41: Paßstift
- 42: Bohrung
- 43: Schrauben
- 44: Kupplungsleiste
- 45: Bohrung
- 46: Freiraum
- 47: Tischplatte
- 48: Länge
- 49: Länge
- 50: Haltebügel
- 51: Öffnung
- 52: Lager
- 53: Bohrung
- 54: Seitenführungsleiste
- 55: Achse
- 56: Sackloch
- 57: Bohrung
- 58: Antriebsmotor
- 59: Distanz
- 60: Breite
- 61: Radius
- 62: Linearförderstrecke
- 63: Einzelteil
- 64: Greifer
- 65: Stützkonsole
- 66: Kettengliedlänge
- 67: Stützleiste
- 68: Handhabunsgerät
- 69: Schraubvorrichtung
- 70: Teilungsmaß
- 71: Umlenkscheibe
- 72: Antriebswelle
- 73: Gehäuse
- 74: Führungssäule
- 75: Gewindespindel
- 76: Verstellmotor
- 77: Wandermutter
- 78: Federanordnung
- 79: Federblockiervorrichtung
- 80: Führungsleistenteil
- 81: Führungsleistenteil
- 82: Führungssäule
- 83: Distanz
- 84: Radius
- 85: Zahnlücke
- 86: Breite
- 87: Breite
- 88: Grundkörper
- 89: Öffnung
- 90: Bohrung
- 91: Gewindebohrung
- 92: Senkschraube
- 93: Ausnehmung
- 94: Führungsansatz
- 95: Seitenwand
- 96: Zentrierstift

## Patentansprüche

1. Anlage (1) mit mehreren Arbeitsstationen zur Bearbeitung und bzw. oder Montage von Bauteilen (2), mit Werkstückträgern (3) die mit Aufnahmen (4) zur Halterung von Bauteilen (2) versehen sind, und einer mit diesen verbundenen Transportkette (5) als Vorschubantrieb und mit einer Führungeinrichtung mit Führungsbahnen (11, 12) mit Führungsleisten (23) für die Höhenführung der Transportkette (5), die auf gleichartig ausgebildeten Gehäuseteilen (8) parallel zu einer Oberseite derselben verlaufend angeordnet sind, deren Länge vorzugsweise gleich groß ist wie die Länge der Führungsbahn, wobei die Gehäuseteile (8) der Anlage (1) untereinander und mit einer Umlenkstation (7) für die Transportkette (5) über Führungs- und bzw. oder Kupplungsvorrichtungen (10) zu einer Gehäuseeinheit verbunden sind, die über Stützvorrichtungen (13) auf einer Aufstandsfläche abgestützt ist, dadurch gekennzeichnet, daß die durch die Kettenglieder der Transportkette (5) gebildeten Werkstückträger (3) über auf den Führungsleisten (23) sich abwälzende Laufrollen (33) der Höhe nach abgestützt und geführt sind und diese Werkstückträger (3) entlang einer parallel zu der auf der Oberseite des Gehäuseteils (8) angeordneten Führungsbahn (11, 12) verlaufenden Seitenführungsbahn (25), die einer Längsseite der Transportkette (5) zugeordnet ist und der auf der gegenüberliegenden Längsseite eine Preßvorrichtung zum Ausüben einer in Richtung der Seitenführungsbahn (25) gerichteten Druckkraft (32) zugeordnet ist, seitlich spielfrei geführt sind.

2. Anlage nach Anspruch 1, dadurch gekennzeichnet, daß der Gehäuseteil (8) einstückig und selbsttragend ausgebildet ist und zwei zueinander parallel verlaufende Führungsbahnen (11, 12) für einen gezogenen und einen rücklaufenden Strang der Transportkette (5) lagert.

3. Anlage nach Anspruch 1 oder 2, dadurch gekennzeichnet, daß die Führungsbahnen über Stirnplatten, die die Führungs- und bzw. oder Kupplungsvorrichtungen (10) lagern, miteinander verbunden sind.

4. Anlage nach Anspruch 1, dadurch gekennzeichnet, daß die Seitenführungsbahn (24, 25) durch längs der Führungsbahn (11, 12) mit im Abstand voneinander angeordneten Stützrollen (28)gebildet ist, die auf etwa in senkrecht zur Oberseite der Gehäuseteile (8) verlaufenden Achsen (55) gelagert sind.

5. Anlage nach Anspruch 1 oder 4, dadurch gekennzeichnet, daß die Stützrollen (28) beidseits der Transportkette (5) angeordnet sind.

6. Anlage nach einem oder mehreren der Ansprüche 1 bis 5, dadurch gekennzeichnet, daß eine Tischplatte (47) zur Aufnahme von Handhabungs- und bzw. oder Bearbeitungsvorrichtungen (68, 69) gegenüber den Gehäuseteilen (8) relativ verschiebbar gelagert ist.

7. Anlage nach einem oder mehreren der Ansprüche 3 bis 6, dadurch gekennzeichnet, daß zwischen den Führungsbahnen (11, 12) und den Stirnplatten (9) ein Freiraum (46) angeordnet ist.

8. Anlage nach Anspruch 6 oder 7, dadurch gekennzeichnet, daß die Tischplatte (47) in dem Freiraum (46) angeordnet ist und eine Länge (48) der Tischplatte (47) kleiner ist als eine Länge (49) des Freiraums (46) in Längsrichtung der Führungsbahnen (11, 12).

9. Anlage nach Anspruch 7 oder 8, dadurch gekennzeichnet, daß im Freiraum (46) Stützleisten (67) für die Tischplatte (47) angeordnet sind.

10. Anlage nach einem oder mehreren der Ansprüche 1 bis 9, dadurch gekennzeichnet, daß in den Umlenkstationen (7) eine Umlenkscheibe (71) für die Transportkette (5) angeordnet ist und zumindest einer von zwei den Gehäuseteilen (8) zugeordneten Umlenkstationen (7) ein Vorschubantrieb (6) für die Umlenkscheibe (71) zugeordnet ist.

11. Anlage nach Anspruch 10, dadurch gekennzeichnet, daß die Umlenkscheibe (71) mit einer sich in Längsrichtung der Transportkette (5) erstreckenden Dämpfungs- und bzw. oder Einstellvorrichtung z.B. einer Gewindespindel (75) bzw. einer Federanordnung (78) verbunden ist.

12. Anlage nach Anspruch 11, dadurch gekennzeichnet, daß der Dämpfungsvorrichtung für die Umlenkscheibe (71) eine Federblockiervorrichtung (79) zugeordnet ist.

13. Anlage nach Anspruch 11 oder 12, dadurch gekennzeichnet, daß beide Umlenkscheiben (71) mit einem Vorschubantrieb (6) gekoppelt sind und diesen Vorschubantrieben (6) jeweils eine Dämpfungs- und bzw. oder Einstellvorrichtung und eine Federblockiervorrichtung zugeordnet ist.

14. Anlage nach einem oder mehreren der Ansprüche 1 bis 13, dadurch gekennzeichnet, daß sich die Höhenführungsbahn in der Umlenkstation (7) von dem dieser unmittelbar vorgeordneten Gehäuseteil (8) bis über eine Antriebswelle (72) bzw. der Umlenkscheibe (71) erstreckt.

15. Anlage nach einem oder mehreren der Ansprüche 1 bis 14, dadurch gekennzeichnet, daß eine Distanz (83) zwischen der Höhenführungsbahn und der Drehachse bzw. Antriebswelle (72) im Bereich des Scheitelpunktes der Umlenkscheibe (71) größer ist als ein Radius (84) eines Fußkreises der Umlenkscheibe (71) und diese Distanz (83) in Umfangsrichtung der Umlenkscheibe (71) auf diesen Radius (84) abnimmt.

16. Anlage nach einem oder mehreren der Ansprüche 1 bis 15, dadurch gekennzeichnet, daß die Höhenführungsbahn in der Umlenkstation (7) einen über eine Längseinstellvorrichtung z.B. auf einer Führungssäule (82) verschiebbare Klemmböcke positionierbaren Führungsleistenteil (81) umfaßt.

17. Anlage nach einem oder mehreren der Ansprüche 1 bis 16, dadurch gekennzeichnet, daß die Höhenführungsbahn in der Umlenkstation (7) aus zwei teleskopartig gegeneinander verschiebbaren Führungsleistenteilen (80, 81) besteht.

18. Anlage nach einem oder mehreren der Ansprüche 1 bis 17, dadurch gekennzeichnet, daß die Transportkette (5) mit den Führungsbahnen (11, 12) zugeordneten Laufrollen (33) versehen ist, die quer zur Kettenlängsrichtung voneinander distanziert sind und daß eine Breite der Führungsleistenteile (80, 81) kleiner ist als eine Breite einer Laufrolle (33) die in die Umlenkscheibe (71) eingreift.

19. Anlage nach einem oder mehreren der Ansprüche 1 bis 18, dadurch gekennzeichnet, daß eine Länge eines Gehäuseteils ein Mehrfaches einer Breite desselben beträgt.

20. Anlage nach einem oder mehreren der Ansprüche 1 bis 19, dadurch gekennzeichnet, daß eine Länge (19) eines Gehäuseteils (8) in etwa einer Kettengliedlänge (66) von drei Kettengliedern entspricht.

21. Anlage nach einem oder mehreren der Ansprüche 1 bis 20, dadurch gekennzeichnet, daß die Stützvorrichtung (13) durch an Seitenflächen der Gehäuseteile bzw. Umlenkstation (7) angeordnete L-förmige Stützen gebildet ist, die zwei ungleichlange Schenkel aufweisen, von welchen der Kürzere der Aufstandsfläche (14) und der Längere dem Gehäuseteil (8) bzw. der Umlenkstation (7) zugeordnet ist und daß vorzugsweise im gleichen Querschnittsbereich auf den einander gegenüberliegenden Seitenflächen spiegelbildlich je eine Stütze angeordnet ist.

22. Anlage nach einem oder mehreren der Ansprüche 1 bis 21, dadurch gekennzeichnet, daß die Stützvorrichtung (13) in den Gehäuseteilen (8) zugeordneten Befestigungsvorrichtungen insbesondere Montageleisten (17)befestigt sind.

23. Anlage nach einem oder mehreren der Ansprüche 7 bis 22, dadurch gekennzeichnet, daß die Preßvorrichtung durch in radialer Richtung elastische Druckrollen (29) gebildet ist und eine Distanz zwischen einer entspannten Druckrolle (29) und der gegenüberliegenden Seitenführungsbahn (25) kleiner ist als eine Breite (60) der Transportkette bzw. der mit diesen gekuppelten Werkstückträger (3).

24. Anlage nach einem oder mehreren der Ansprüche 1 bis 23, dadurch gekennzeichnet, daß die Druckrollen (29) und Stützrollen (28) in Förderrichtung der Transportkette (5) gegeneinander versetzt angeordnet sind.

25. Analge nach einem oder mehreren der Ansprüche 1 bis 24, dadurch gekennzeichnet, daß die Druckrollen (29) und bzw. oder die Stützrollen (28) mit einem Antrieb z.B. einem Antriebsmotor (58) oder einem Ketten- oder Riemenantrieb gekuppelt sind.

26. Anlage nach einem oder mehreren der Ansprüche 1 bis 25, dadurch gekennzeichnet, daß der Vorschubantrieb ein Servoantrieb, beispielsweise ein elektrischer Schrittschaltmotor, ist.

## Claims

1. Installation (1) with several workstations for processing and/or assembly of components (2), with workpiece carriers (3) provided with receivers (4) for holding components (2), and connected with the latter a chain conveyor (5) serving as drive device , and comprising a guidance device with guide tracks (11, 12) with guide rails (23) for vertical guidance of the chain conveyor (5), which are arranged on identical housing parts (8) extending parallel to the upper side of the housings parts (8) , the length of which is preferably the same than the length of the guide track, wherein the housing parts (8) of the installation (1) are connected with one another and with a deflecting unit (7) for the chain conveyor (5) by means of guidance and/or coupling devices (10) to a housing unit, which by means of support devices (13) is supported on a bearing surface, characterized in that the workpiece carriers (3) which are formed by the chain links of the chain conveyor (5) are vertically supported and guided by track rollers (33) moving in a seesaw manner on the guide rails (23) and these workpiece carriers (3) are laterally guided without play along a lateral guide track (25) running parallel to the guide track (12, 12) arranged on the upper side of the housing part (8), which is associated with the longitudinal side of the chain conveyor (5), and which is also associated with a pressure device on the opposite longitudinal side in order to exert a pressure force (32) in the direction of the lateral guide track (25).

2. Installation according to claim 1, characterized in that the housing part (8) is formed in one piece and self-supporting and accommodates two guide tracks (11, 12) for a tight and a slack strand of the chain conveyor (5).

3. Installation according to claim 1 or 2, characterized in that the guide tracks are connected with one another by front plates which accommodate the guidance and/or coupling devices (10).

4. Installation according to claim 1, characterized in that the lateral guide track (24, 25) is formed by support rollers (28) which, spaced apart from each other, are arranged along the guide track (11, 12) and accommodated on axes (55) running about vertically to the upper side of the housing parts (8).

5. Installation according to claim 1 or 4, characterized in that the support rollers (28) are arranged on both sides of the chain conveyor (5).

6. Installation according to one or more of claims 1 to 5, characterized in that a table top (47)for accommodating handling and processing devices (68, 69) is positioned so as to be displaceable relative to the housing parts (8).

7. Installation according to one or more of claims 3 to 6, characterized in that a free space (46) is arranged between the guide tracks (11, 12) and the front plates (9).

8. Installation according to claim 6 or 7, characterized in that the table top (47) is arranged in the free space (46) and that a length (48) of the table top (47) is smaller than a length (49) of the free space (46) in the longitudinal direction of the guide tracks (11, 12).

9. Installation according to claim 7 or 8, characterized in that support rails (67) for the table top (47) are arranged in the free space (46).

10. Installation according to one or more of claims 1 to 9, characterized in that a deflecting disc (71) for the chain conveyor (5) is arranged in the deflecting units (7) and that at least one of the two deflecting units (7) associated with the housing parts (8), is associated with a drive device (6) for the deflecting disc (71).

11. Installation according to claim 10, characterized in that the deflecting disc (71) is connected with a damping and/or setting device, for example a threaded spindle (75) or a spring arrangement (78).

12. Installation according to claim 11, characterized in that the damping device for the deflecting disc (71) is associated with a spring-locking device (79).

13. Installation according to claim 11 or 12, characterized in that the two deflecting discs (71) are coupled to a drive device (6) and that each of these drive devices (6) are associated with a damping and/or setting device and a spring-locking device.

14. Installation according to one or more fo claims 1 to 13, characterized in that the vertical guide track in the deflecting unit (7) extends from the housing part (8) arranged immediately in front of it over a driving shaft (72) or the deflecting disc (71).

15. Installation according to one or more of claims 1 to 14, characterized in that a distance (83) between the vertical guide track and the axis of rotation or the driving shaft (72) in the region of the vertex of the deflecting disc (71) is larger than a radius (84) of a dedendum line of the deflecting device (71) and that this distance (83) decreases in the direction of the periphery of the deflecting disc (71) with respect to this radius (84).

16. Installation according to one or more of claims 1 to 15, characterized in that the vertical guide track in the deflecting unit (7) comprises a guide rail portion (81)the position of which is adjustable by means of a longitudinal setting device, for example clamping blocks displaceable on a guide column (82).

17. Installation according to one or more of claims 1 to 16, characterized in that the vertical guide track in the deflecting unit (7) consists of two guide rail portions (80, 81)which are telescopically displaceable relative to one another.

18. Installation according to one or more of claims 1 to 17, characterized in that the chain conveyor (5) has guide tracks (11, 12) being associated with track rollers (33), which are spaced apart from one another transverse to the longitudinal direction of the chain and that a width of the guide rail portions (80, 81) is smaller than a width of a track roller (33) engaging in the deflecting disc (71).

19. Installation according to one or more of claims 1 to 18, characterized in that a length of a housing part is a multiple of its width..

20. Installation according to one or more of claims 1 to 19, characterized in that a length (19) of a housing part (8) corresponds approximately to a chain link length (66) of three chain links.

21. Installation according to one or more of claims 1 to 20, characterized in that the support device (13) is formed by L-shaped supports which are arranged on the side faces of the housing parts or the deflecting unit (7) and have two shanks of unequal length, of which the shorter is associated with the support surface (14) and the longer with the housing part (8) or the deflecting unit (7) and preferably, in that a support is disposed in a reversed manner in the same cross-sectional area than the side faces situated across from each other.

22. Installation according to one or more of claims 1 to 21, characterized in that the support device (13) is secured to the fastening devices which are associated with the housing parts (8), in particular to assembly rails (17).

23. Installation according to one or more of claims 7 to 22, characterized in that the pressure device is formed by elastic pressure rollers (29) in the radial direction and in that a distance between a slack pressure rollers (29) and the oppposite lateral guide track (25) is smaller than a width (60) of the chain conveyor or the workpiece carrier (3) coupled to the latter.

24. Installation according to one or more of claims 1 to 23, characterized in that the pressure rollers (29) and the support rollers (28) are offset relative to one another in the conveying direction of the chain conveyor (5).

25. Installation according to one or more of claims 1 to 24, characterized in that the pressure rollers (29) and/or the support rollers (28) are coupled to a drive, for example a driving motor (58) or a chain or belt drive.

26. Installation according to one or more of claims 1 to 25, characterized in that the drive device is a servo-drive, for example an electrically operating stepping motor.

## Revendications

1. Installation (1) avec plusieurs postes de travail pour l'usinage ou le montage de pièces détachées (2), avec des porte-pièces (3), auxquels sont affectés des récipients (4) pour la fixation des pièces détachées (2), et relié à ceux- ci un transporteur à chaîne (5) qui sert comme mécanisme d'avance, et avec un dispositif de guidage comportant des voies de guidage (11, 12) avec des tronçons de voie conducteurs (23) pour le guidage en hauteur du transporteur à chaîne (5) qui sont disposées sur des pièces de bâti (8) réalisées de manière identique parallèlement à une face supérieure de celles-ci, dont la longueur correspond de préférence à la longueur de la voie de guidage, et dans laquelle les pièces de bâti (8) de l'installation (1) sont reliées les unes aux autres et à un poste de renvoi (7) pour le transporteur à chaîne (5) par l'intermédiaire des dispositifs de guidage et/ou d'accouplement (10) pour la formation d'une unité de bâti, qui est en appui, par des dispositifs de support (13) contre une surface de contact, caracterisée en ce que les porte-pièces (3) formés par des éléments de chaîne du transporteur à chaîne (5) sont guidés et supportés en hauteur par des galets de roulement (33) qui roulent sur les tronçons de voie conducteurs (23) et que ces porte-pièces (3) sont guidés latéralement sans jeu en parallèle de la voie de guidage (11, 12) sur la face supérieure de la pièce de bâti (8) le long d'une voie de guidage latérale (25), qui est associée au grand côté du transporteur à chaîne (5), et qu'au grand côté à l'opposé de celui-ci est associé un dispositif de compression pour l'application d'une force de pression (32) en direction de la voie de guidage latérale (25).

2. Installation selon la revendication 1, caractérisée en ce que la pièce de bâti (8) est formée en une pièce et de manière non soutenue et qu'elle contient deux voies de guidage (11, 12) en parallèle l'une à l'autre pour un brin de chaîne conducteur et un brin de chaîne conduit du transporteur à chaîne (5).

3. Installation selon la revendication 1 ou 2, caractérisée en ce que les voies de guidage sont reliées l'une à l'autre par des plaques de front, qui servent à loger les dispositifs de guidage et/ou d'accouplement.

4. Installation selon la revendication 1, caractérisée en ce que la voie de guidage latérale (24, 25) est formée le long de la voie de guidage (11, 12) par des galets de support (28) espacés les uns des autres, qui sont disposés sur des axes (55) à peu près perpendiculairement à la face supérieure des pièces de bâti (8).

5. Installation selon la revendication 1 ou 4, caractérisée en ce que les galets de support (28) sont disposés à tous les deux côtés du transporteur à chaîne (5).

6. Installation selon une ou plusieurs des revendications 1 à 5, caractérisée en ce qu'un dessus de table (47) recevant les mécanismes de manipulation et/ou d'usinage (68, 69) est positionné de façon déplaçable relatif aux pièces de bâti (8).

7. Installation selon une ou plusieurs des revendications 3 à 6, caractérisée en ce qu'un espace disponible (46) est disposé entre les voies de guidage (11, 12) et les plaques de front (9).

8. Installation selon la revendication 6 ou 7, caractérisée en ce que le dessus de table (47) est disposé dans l'espace disponible (46) et une longueur (48) du dessus de table (47) est plus petite qu'une longueur (49) de l'espace disponible (46) dans la direction longitudinale des voies de guidage (11, 12).

9. Installation selon la revendication 7 ou 8, caractérisée en ce que les barres de support (67) pour le dessus de table (47) sont disposées dans l'espace disponible (46).

10. Installation selon une ou plusieurs des revendications 1 à 9, caractérisée en ce que dans les postes de renvoi (7) une poulie de renvoi (71) est disposée pour le transporteur à chaîne (5) et qu'au moins un poste de revoi (7) des deux postes associés aux pièces de bâti (8), est associé à un mécanisme d'avance (6) pour la poulie de renvoi (71).

11. Installation selon la revendication 10, caractérisée en ce que la poulie de renvoi (71) est reliée à un dispositif d'amortissement et/ou d'ajustage s'étendant dans le sens longitudinal du transporteur à chaîne (5), une broche filetée (75) par exemple, respectivement une disposition des ressorts (78).

12. Installation selon la revendication 11, caractérisée en ce que le dispositif d'amortissement pour la poulie de renvoi (71) est associé à un dispositif de blocage des ressorts (79).

13. Installation selon la revendication 11 ou 12, caractérisée en ce que les deux poulies de renvoi (71) sont accouplées à un mécanisme d'avance (6) et que chacun de ces mécanismes d'avance (6) est associé à un dispositif d'amortissement et/ou d'ajustage et un dispositif de blocage des ressorts.

14. Installation selon une ou plusieurs des revendications 1 à 13, caractérisée en ce que la voie de guidage en hauteur dans le poste de renvoi (7) s'étend de la pièce de bâti (8) disposée directement devant celui-ci à un arbre menant (72) ou la poulie de renvoi (71).

15. Installation selon une ou plusieurs des revendications 1 à 14, caractérisée en ce qu'une distance (83) entre la voie de guidage en hauteur et l'axe de rotation ou l'arbre menant (72) au voisinage du point de rebroussement de la poulie de renvoi (71) est plus grande qu'un rayon (84) d'un cercle de pied de la poulie de renvoi (71) et que cette distance (83) se réduit dans le sens circonférentiel de la poulie de renvoi (71) sur ce rayon (84).

16. Installation selon une ou plusieurs des revendications 1 à 15, caractérisée en ce que la voie de guidage en hauteur comprend dans le poste de renvoi (7) une section d'un tronçon de voie conducteur (81) qui peut être positionnée par l'intermédiaire d'un dispositif de réglage en longueur, par exemple au moyen des mâchoires de serrage qui peuvent être déplacer sur une colonne de guidage (82).

17. Installation selon une ou plusieurs des revendications 1 à 16, caractérisée en ce que la voie de guidage en hauteur dans le poste de renvoi (7) est constituée par deux sections d'un tronçon de voie conducteur (80, 81) qui sont déplaçables l'une envers l'autre de façon télescopique.

18. Installation selon une ou plusieurs des revendications 1 à 17, caractérisée en ce que le transporteur à chaîne (5) est muni de galets de roulement (33) associés aux voies de guidage (11,12), qui sont écartées l'une de l'autre transversalement à la direction longitudinale de la chaîne et en ce qu'une largeur des sections d'un tronçon de voie conducteur (80, 81) est plus petite qu'une largeur d'un galet de roulement (33) qui engage dans la poulie de renvoi (71).

19. Installation selon une ou plusieurs des revendications 1 à 18, caractérisée en ce qu'une longueur d'une pièce de bâti correspond à un multiple de la largeur de celle-ci.

20. Installation selon une ou plusieurs des revendications 1 à 19, caractérisée en ce qu'une longueur (19) d'une pièce de bâti (8) correspond à peu près à la longueur d'élément de chaîne (66) de trois éléments de chaîne.

21. Installation selon une ou plusieurs des revendications 1 à 20, caractérisée en ce que le dispositif de support (13) est formé par des supports en forme de L, qui sont disposés sur les faces latérales des pièces de bâti ou le poste de renvoi (7), et qui présentent deux branches de longueur différente dont la plus courte est associée à la surface de contact (14) et la plus longue à la pièce de bâti (8) ou au poste de renvoi (7) et de préférence, en ce qu'un support est disposé de façon inversé au voisinage de la même section transversale sur chaque face latérale mutuellement en regard.

22. Installation selon une ou plusieurs des revendications 1 à 21, caractérisée en ce que le dispositif de support (13) est fixé sur les dispositifs de fixation qui sont associés aux pièces de bâti (8), en particulier des barres de montage (17).

23. Installation selon une ou plusieurs des revendications 7 à 22, caractérisée en ce que le dispositif de compression est constitué dans le sens radial par des galets presseurs (29) flexibles et en ce qu'une distance entre un galet presseur mou et la voie de guidage latérale (25) à l'opposé de celui-ci est plus petite qu'une largeur (60) du transporteur à chaîne ou le porte-pièce accouplé à celui-ci.

24. Installation selon une ou plusieurs des revendications 1 à 23, caractérisée en ce que les galets presseurs (29) et les galets de support (28) sont disposés diamètralement opposés dans la direction de transport du transporteur à chaîne (5).

25. Installation selon une ou plusieurs des revendications 1 à 24, caractérisée en ce que les galets presseurs (29) et/ou les galets de support (28) sont couplés à une commande, par exemple un moteur d'entraînement (58) ou un entraînement par chaînes ou par courroies.

26. Installation selon une ou plusieurs des revendications 1 à 25, caractérisée en ce que le mécanisme d'avance est une servocommande, formée par exemple par un moteur pas-à-pas électrique.
